# EUROPEAN PATENT SPECIFICATION

(11) **EP 0 544 401 B1**
(45) Date of publication and mention of the grant of the patent: **20.11.1996**
(21) Application number: 92309668.9
(22) Date of filing: 22.10.1992
(51) Int. Cl.: C08F 2/24, C09D 157/00

(54) **Method for lowering latex dilatancy**
Verfahren zur Erniedrigung der Dilatierung eines Latex
Procédé pour abaisser la dilatance d'un latex

(30) Priority: 27.11.1991 US 799600
(43) Date of publication of application: 02.06.1993
(73) Proprietor: ROHM AND HAAS COMPANY, Philadelphia Pennsylvania 19105 (US)
(72) Inventor: Spada, Lonnie Thomas, Walnut, California 91789 (US)
(74) Representative: Angell, David Whilton

(56) References cited:
- EP-A- 0 469 372
- GB-A- 1 278 813

## Description

### BACKGROUND

The present invention relates to emulsion polymerization processes for preparing latexes having low dilatancy, emulsion polymerization reaction mediums, latexes, coating compositions, coated surfaces, and adhered surfaces.

A problem with various latexes is their high dilatancy. Attempts at controlling dilatancy often result in the loss of one or more desirable latex characteristics.

### SUMMARY OF THE INVENTION

The present invention comprises use of propylene glycol in a process for forming a latex, as an agent for reducing dilatancy of the latex; the process comprising emulsion polymerizing at least one monomer selected from the group consisting of vinyl acetate, esters of acrylic acid, esters of methacrylic acid, olefinic carboxylic acids, and mixtures thereof in the presence of:
(a) at least one water soluble polymer and
(b) the propylene glycol,
wherein the total amount of the propylene glycol employed in the process is at least 0.01 equivalent per 100 parts of total dry weight polymers, copolymers, and copolymerizable monomers used in the emulsion polyermization process (hereinafter referred to as "equivalent per 100 parts pcc"). As used in the specification and claims, the term "water soluble polymer" means a polymer dissolvable in water having a temperature of about 25° C at a concentration of at least about 25 g per 100 g water.

Regarding the emulsion polymerization reaction medium, the reaction medium comprises (a) at least one monomer selected from the group consisting of vinyl acetate, esters of acrylic acid, esters of methacrylic acid, olefinic carboxylic acids, and mixtures thereof; (b) at least one water soluble polymer; and (c) the propylene glycol. The total amount of the propylene glycol added to the reaction medium is at least 0.01 equivalent per 100 parts pcc.

### DETAILED DESCRIPTION OF THE INVENTION

The monomers employed in the emulsion polymerization process of the present invention are selected from the group consisting of vinyl acetate, esters of acrylic acid, esters of methacrylic acid, olefinic carboxylic acids, and mixtures thereof. Exemplary esters of acrylic acid have the formula I 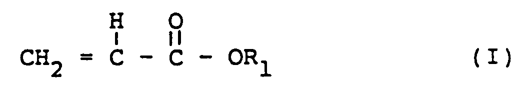 and typical esters of methacrylic acid have the formula II 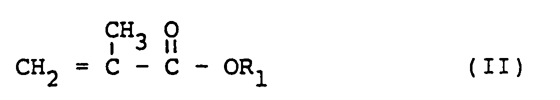 wherein R₁ is selected from the group consisting of alkyl groups, substituted alkyl groups, aryl groups, substituted aryl groups, alkaryl groups, and aralkyl groups containing 1 to about 15 carbon atoms. As used in the specification and claims, the term "alkyl" means cyclic (monocyclic as well as polycyclic) and acylic saturated hydrocarbon groups that can be either branched or unbranched; the term "substituted alkyl" means alkyl groups containing at least one substituent selected from the group consisting of hydroxyl, amine, thiol, and mixtures thereof; the term "aryl" means unsaturated cyclic hydrocarbons in which all carbon atoms are formally included in a system of conjugated double bonds; the term "substituted aryl" means aryl groups containing at least one substituent selected from the group consisting of hydroxyl, amine, thiol, and mixtures thereof; the term "alkaryl" means an aryl group having an alkyl substituent; and the term "aralkyl" means an alkyl group having an aryl substituent.

Common esters of acrylic acid include iso-bornyl acrylate, iso-butyl acrylate, n-butyl acrylate, tert-butyl acrylate, cyclohexyl acrylate, dodecyl acrylate, 2-ethoxyethyl acrylate, ethyl acrylate, 2-ethylhexyl acrylate, 2-hydroxyethyl acrylate, 2-hydroxypropyl acrylate, methyl acrylate, n-octyl acrylate, phenethyl acrylate, phenyl acrylate, iso-propyl acrylate, and n-tetradecyl acrylate.

Some of the more well known esters of methacrylic acid are iso-bornyl methacrylate, iso-butyl methacrylate, n-butyl methacrylate, tert-butyl methacrylate, tert-butylaminoethyl methacrylate, iso-decyl methacrylate, dimethylaminoethyl methacrylate, ethyl methacrylate, 2-hydroxyethyl methacrylate, 2-hydroxypropyl methacrylate, lauryl methacrylate, methyl methacrylate, n-octyl methacrylate, iso-propyl methacrylate, and tridecyl methacrylate.

Regarding the olefinic carboxylic acid monomers, the olefinic carboxylic acid monomers include both olefinic mono-carboxylic acid monomers and olefinic di-carboxylic acid monomers. Exemplary olefinic mono-carboxylic acids include acrylic acid, and methacrylic acid. Fumaric acid, itaconic acid, and maleic acid exemplify typical olefinic di-carboxylic acids. Mixtures of olefinic carboxylic acids can also be used.

Concerning the water soluble polymer, preferably at least about 30 g, more preferably at least about 35 g, and most preferably at least about 40 g, of the water soluble polymer is dissolvable in about 100 g water at a temperature of about 25° C. Alternatively, the amount of the water soluble polymer employed in the emulsion polymerization process of the present invention is capable of being dissolved in a volume of water (at about 25° C) equal to the amount of water present in the latex produced by the emulsion polymerization process of the invention. The amount of the water soluble polymer employed in the process of the present invention is preferably capable of being dissolved in a volume of water (at about 25° C) equal to about 90 percent (more preferably about 75 percent, and most preferably about 50 percent) of the amount of water present in the latex produced by the process of the invention.

Exemplary water soluble polymers include, polyvinyl alcohol, polyvinyl pyrrolidone, polyacrylamide, polyacrylonitrile, polyacrylic acid, starches, xanthum gum, hydroxyalkyl celluloses (e.g., hydroxyethyl cellulose, hydroxypropyl cellulose), polyethylene oxide, and copolymers containing at least two entities selected from the group consisting of vinyl acetate, vinyl alcohol, vinyl pyrrolidone, acrylamide, acrylonitrile, acrylic acid, methacrylic acid, styrene, esters of acrylic acid, esters of methacrylic acid, and mixtures thereof.

The propylene glycols are 1,2-propylene glycol and 1,3-propylene glycol.

The total amount of the propylene glycol employed in the emulsion polymerization process of the present invention is preferably 0.01 to 0.1, more preferably 0.02 to 0.08, and most preferably 0.03 to 0.05 equivalent per 100 parts pcc.

Optionally, an active or latent crosslinking agent is also employed in the emulsion polymerization process of the invention. As used in the specification and claims, the term "active crosslinking agent" means a functional monomer which immediately provides crosslinking of the polymer during the initial formation of the emulsion polymer (i.e., during the polymerization step) to increase the molecular weight of the emulsion polymer. Subsequent drying or other curing techniques are not required for the crosslinking of the emulsion polymer by the active crosslinking agent. Monomers of this type generally comprise compounds which contain 2 to 5 ethylenically unsaturated groups in one molecule, where the unsaturated groups are capable of undergoing addition polymerization by free radical means. Typical active crosslinking agents include alkylene gylcol diacrylates and methacrylates, such as ethylene glycol diacrylate, 1,3-butylene glycol diacrylate, propylene glycol diacrylate, triethylene glycol dimethacrylate, 1,3-glycerol dimethacrylate, 1,1,1-trimethylol propane dimethacrylate, 1,1,1-trimethylol ethane diacrylate, pentaerythritol trimethacrylate, sorbitol pentamethacrylate, methylene bismethacrylamide, divinyl benzene, vinyl methacrylate, vinyl crotonate, vinyl acrylate, divinyl adipate; di- and tri-allyl compounds, such as triallyl cyanurate, triallyl isocyanurate, diallyl phthalate, allyl methacrylate, allyl acrylate, diallyl maleate, diallyl fumarate, diallyl itaconate, diallyl malonate, diallyl carbonate, triallyl citrate, triallyl aconitate; divinyl ether, and ethylene glycol divinyl ether.

As used in the specification and claims, the term "latent crosslinking agent" means a polyfunctional monomer wherein a portion of the functionality enters into the polymerization with other monomers in the polymer emulsion, with the residual functionality causing crosslinking of the polymer upon the subsequent application of energy generally by applying heat, e.g., by drying or curing of the latex particles, often in the presence of a catalyst, or by applying radiation. Upon the subsequent application of energy, the latent crosslinking agent forms a water insoluble crosslinking network, with the crosslinking being triggered generally by heat or radiation after the polymer emulsion has been formed and applied. Examples of latent crosslinking agents include N-alkyloamides of α,β-ethylenically unsaturated carboxylic acids having 3 to 10 carbon atoms, such as N-methylol acrylamide, N-ethanol acrylamide, N-propanol acrylamide, N-methylol methacrylamide, N-ethanol methacrylamide, N-methylol maleamide, N-ethanol maleamide, N-methylol maleamic acid, N-methylol maleamic acid esters; the N-alkylol amides of vinyl aromatic acids, such as N-methylol-p-vinylbenzamide; N-(alkoxymethyl) acrylates and methacrylates, where the alkyl group has from 1 to 8 carbon atoms, such as N-(methoxymethyl) acrylamide, N-(butoxymethyl) acrylamide, N-(methoxymethyl) methacrylamide; N-methylol allyl carbamate and N-alkoxymethyl derivatives thereof such as N-(butyloxymethyl) allyl carbamate and N-(methoxymethyl) allyl carbamate as well as mixtures of these monomers with allyl carbamate, acrylamide, or methacrylamide.

Surfactants, seeds, chain transfer agents, catalysts, as well as other ingredients employed in emulsion polymerization process are also optionally used in the process of the present invention.

The emulsion polymerization process of the present invention employs emulsion polymerization techniques know to those skilled in the art. A discussion of such techniques appears in Rohm and Haas publication CM-104A/cf entitled Emulsion Polymerization of Acrylic Monomers. The emulsion polymerization process of the present invention employs substantially the same amounts of monomers, water soluble polymers, crosslinking agents, surfactants, seeds, chain transfer agents, catalysts, and other ingredients as employed in prior art process for making latexes intended for the same end use. The polymerization process of the present invention is characterized in that at least a portion of the process takes place in the presence of the propylene glycol and that at least 0.01 equivalent of the propylene glycol is employed in the process per 100 parts of the total dry weight of polymers, copolymers, and copolymerizable monomers used in the emulsion polymerization process. The propylene glycol is initially charged to the reactor and/or delay added during the course of the synthesis. Preferably, the propylene glycol is initially charged to the reactor.

The emulsion polymerization process is considered to be terminated once the final amount of initiator is added to the reaction medium to ensure that substantially all of the added monomer has polymerized. Preferably, the emulsion polymerization process is considered terminated after the delay addition of a monomer-containing preemulsion is finished.

Latexes formed using the emulsion polymerization process of the present invention maintain their desirable characteristics while exhibiting virtually no dilatancy. A dilatant latex exhibits a non-linear increase in viscosity with with increasing shear rate. (In contrast, a Newtonian latex exhibits a substantially linear increase in viscosity with increasing shear rate, whereas a psuedoplastic latex exhibits a non-linear decrease in viscosity with increasing shear.)

In a preferred embodiment, the latex is a wood adhesive. In this version of the invention, the monomers employed in the synthesis are typically selected from the group consisting of vinyl acetate, methacrylic acid, butyl acrylate, 2-ethylhexyl acrylate, and mixtures thereof; the water soluble polymer is generally selected from the group consisting of polyvinyl alcohol, hydroxyethyl cellulose, and mixtures thereof; the crosslinking agent is commonly selected from the group N-methylolacrylamide, triallyl cyanurate, N-(iso-butoxymethyl) acrylamide, and mixtures thereof; and the surfactant is frequently selected from the group consisting of anionic surfactants (e.g., alkylphenyl sulfates and sulfonates and alkylsulfosuccinates), nonionic surfactants (e.g., alkylarylpolyether alcohols, alkylphenolethoxylates, alkylethoxylates, and ethyleneoxide/propylene oxide block copolymers), and mixtures thereof. The preferred and more preferred concentrations of these materials employed in synthesizing the wood adhesive latex of the present invention are set forth below in Table I.

**TABLE I**

| Ingredient | Concentration | |
|---|---|---|
| | Preferred | More Preferred |
| Monomer, wt %^{a} | 80 to 98 | 85 to 96 |
| Water Soluble Polymer, wt % | 1.5 to 10 | 2 to 5 |
| propylene glycol^{b} | 0.01 to 0.1 | 0.02 to 0.08 |
| Crosslinking Agent, wt % | 1 to 8 | 2 to 6 |
| Surfactant, wt % | 0.1 to 2 | 0.25 to 1 |

| | | |
|---|---|---|
| a. As used in the specification and claims the terms "wt %" and "weight percent" mean the total dry weight of a respective polymeric, copolymeric, or monomeric ingredient employed during the emulsion copolymerization procedure in making the latex divided by the total weight of the polymeric, copolymeric, and monomeric ingredients employed during the emulsion copolymerization procedure in making the latex, this quotient being multiplied by 100%. Examples of such polymeric, copolymeric, and monomeric ingredients are the monomers, the water soluble polymer, monomeric crosslinking agents, and copolymerizable surfactants. | | |
| b. propylene glycol compound concentration is expressed in equivalent per 100 parts pcc. | | |

With respect to the monomer ingredient, the monomeric component preferably comprises 0.1 to 2 weight percent methacrylic acid, at least 60 weight percent vinyl acetate, and less than 20 weight percent of a constituent selected from the group consisting of butyl acrylate, 2-ethylhexyl acrylate, and mixtures thereof. More preferably, the monomeric component comprises 0.25 to 1 weight percent methacrylic acid, at least 75 weight percent vinyl acetate, and less than about 10 weight percent of a constituent selected from the group consisting of butyl acrylate, 2-ethylhexyl acrylate, and mixtures thereof.

The wood adhesive latexes of the present invention are made for example, by a delayed addition emulsion polymerization process. In a preferred wood adhesive latex synthesis procedure, water, hydroxyethyl cellulose, a buffer (generally having a buffering capacity in the pH range of 5.5 to 7 and preferably within the pH range of 6 to 7), an antifoaming agent, and the propylene glycol (or anti-dilatancy agent), are added to a reactor. The reactor is then heated, generally to 65° C to 82° C (150° to 180° F.), while preferably purging the reactor with an inert gas, such as nitrogen, to remove substantially all oxygen from the reactor. A portion of a preemulsion comprising water, polyvinyl alcohol, the surfactant, the monomers, and crosslinking agent) is added to the reactor while the reactor has a temperature generally between about room temperature and about 82° C (180° F), and preferably while the reactor temperature is between about room temperature and and 71° C (160° F). The portion of the preemulsion charged to the reactor usually constitutes 1 to 10 (and preferably 3 to 7) percent by weight based upon the weight of the entire amount of preemulsion used during the emulsion polymerization process. After charging the reactor with a portion of the preemulsion and after the reactor reaches a temperature of at least about 38° C (100° F) (and preferably at least about 60° C (140° F)), an initiator and an activator are added to the reactor. After the addition of the initiator and activator, the delay-addition of the remaining portion of the preemulsion is commenced. The items added to the reactor form a transient emulsion polymerization reaction medium. The ensuing reaction within the emulsion polymerization reaction medium forms the latex of the present invention. The delay-addition of the preemulsion typically takes up to about 3 hours. During the delay-addition of the preemulsion, additional initiator is typically also added to the reactor.

After finishing the delay-addition of the preemulsion, further initiator is commonly added while maintaining the latex at the elevated reaction temperature to ensure that substantially all of the monomers polymerize. The same initiator is commonly used whenever one is employed. Exemplary initiators include ammonium persulfate, potassium persulfate, sodium persulfate, t-butyl hydroperoxide, hydrogen peroxide, and mixtures thereof. Typical activators are sodium formaldehyde sulfoxylate, sodium metabisulfite, and mixtures thereof.

The latex, which generally has a solids content of 40 to 60 percent by weight based upon the total weight of the latex, is allowed to cool to ambient or room temperature after all the preemulsion and initiator have been added.

The non-dilatant wood adhesive latexes of the present invention are employed using techniques well known to those skilled in the art.

### EXAMPLES

The capability of the emulsion polymerization process of the present invention to yield latexes having substantially the same desirable characteristics but drastically reduced, if any dilatancy, is demonstrated in the following examples. Example 1 demonstrates the synthesis of a wood adhesive latex in accordance with the process of the present invention. The latex prepared in Example 1 exhibits excellent adhesive properties and no dilatancy. Example 2, which is a comparative example, demonstrates the synthesis of a wood adhesive latex having excellent adhesive characteristics but unacceptable dilatancy. The only substantial difference between the emulsion polymerization processes of Examples 1 and 2 is the use of propylene glycol in Example 1.

### EXAMPLE 1

### A. Synthesis of Wood Adhesive Latex

A hydroxyethyl cellulose solution was prepared by dissolving Cellosize QP09 brand hydroxyethyl cellulose (about 13.5 g; available from Union Carbide) in about 123 g water. A polyvinyl alcohol solution was made by dissolving Airvol 205 brand polyvinyl alcohol (about 9.6 g; available from Air Products) in about 86 g distilled water. A preemulsion was formed by mixing water (about 165 g), the polyvinyl alcohol solution (about 87 g), Triton X 405 brand nonionic surfactant (about 3.8 g; about 100% active; available from Union Carbide), methacrylic acid (about 3.9 g), a N-methylolacrylamide solution (about 56.1 g; about 48% active), Aerosol OT75 brand anionic surfactant (about 0.5 g; about 75% active; available from American Cyanamide), and vinyl acetate (about 612 g). Next, an initiator solution was prepared by mixing water (about 100 g) and ammonium persulfate (about 4 g), and an activator solution was formed by mixing water (about 9.1 and sodium formaldehyde sulfoxylate (about 0.5 g), the sodium formaldehyde sulfoxylate being added to form the activator solution just before reaction.

A reactor was charged with water (about 113 g), the hydroxyethyl cellulose solution (about 124 g), sodium acetate (about 2.5 g), Foamaster VF brand antifoaming agent (about 0.93 g; available from Henkel), and propylene glycol (about 10 g).

The reactor was then purged with nitrogen, heated, and charged with about 46 g of the preemulsion. When the reactor reached about 66° C (150° F), about 0.45 g ammonium persulfate in about 4 ml water and about 2 ml of the activator solution were added to the reactor. When the temperature within the reactor plateaued, additional heat was applied to the reactor. When the reactor temperature reached about 77° C (170° F), the initiator solution feed was started at a rate of about 1.2 ml/15 minutes. When the reactor temperature reached about 82° C (180° F), the delay addition of the preemulsion feed was started at a rate of about 10 ml/15 min. About an hour after commencing the preemulsion delay feed, the feed rate of the preemulsion was increased to about 24 ml/15 minutes and the initiator solution feed rate was increased to about 2 ml/15 minutes. After about two hours from the commencement of the preemulsion feed, the feed rate of the preemulsion was further increased to about 50 ml/15 minutes. During the entire preemulsion delay feed period the temperature within the reactor was maintained at about 82° C (180° F).

After finishing the delay addition feeds, the temperature within the reactor was raised to about 88° C (190° F) and held there for about 30 minutes. Next, the reactor was allowed to cool and about 4 ml of the activator solution were added to the reactor. When the temperature within the reactor fell below about 38° C (100° F), the latex wood adhesive was removed form the reactor.

### B. Latex Adhesive Evaluation

The latex wood adhesive was tested for dilatancy, brushability, and adhesive strength and the results are set forth in the following Table II:

**TABLE II**

| Ex | Propylene Glycol^{a} | Dilatancy^{b}, 0-low -> 10-high | Brushability^{c} | Adhesive Strength^{d}, % fiber tear |
|---|---|---|---|---|
| 1 | 0.04 | 0 | Excellent | 100 |
| 2 | 0 | 10 | Poor | 100 |

| | | | | |
|---|---|---|---|---|
| a. Propylene glycol concentration is in terms of equivalent per 100 parts of total dry weight of polymers, copolymers, and copolymerizable monomers used in the emulsion polymerization process. | | | | |
| b. Dilatancy was tested by rubbing the latex between the thumb and forefinger. | | | | |
| c. Brushability was tested by applying about 10 g of a latex to a 15.24 cm by 15.24 cm by 0.48 cm (6 inch by 6 inch by 3/16 inch) birch panel and using a 1 inch brush to spread the latex. If no brush drag was experienced in spreading the latex, the brushability was rated excellent. When extreme brush drag was experienced in spreading the latex, the brushability was rated poor. | | | | |
| d. Adhesive strength was tested using the American Plywood Association test procedure PS5171. | | | | |

### EXAMPLE 2

### Comparative Test

Another latex wood adhesive was prepared using the synthesis procedure of Example 1 with one basic modification. The sole significant modification was that no propylene glycol was employed in the synthesis. The resulting wood adhesive latex was evaluated for dilatancy, brushability, and adhesive strength and the results are also set forth in above Table II.

As can be seen from Table II, in the emulsion polymerization process of Example 1, dilatancy was removed while maintaining the excellent wood adhesive characteristics of the latex by employing 0.04 equivalent propylene glycol per 100 parts of total dry weight of polymers, copolymers, and copolymerizable monomers used in the emulsion polymerization process.

## Claims

1. Use of propylene glycol in a process for forming a latex, as an agent for reducing dilatancy of the latex; the process comprising emulsion polymerizing at least one monomer selected from the group consisting of vinyl acetate, esters of acrylic acid, esters of methacrylic acid, olefinic carboxylic acids, and mixtures thereof in the presence of:
(a) at least one water soluble polymer and
(b) the propylene glycol,
wherein the total amount of the propylene glycol employed in the process is at least 0.01 equivalent per 100 parts of total dry weight polymers, copolymers, and copolymerizable monomers used in the emulsion polymerization process.

2. The use of claim 1, wherein the total amount of the propylene glycol employed in the process is 0.01 to 0.1 equivalent per 100 parts of total dry weight of polymers, copolymers and copolymerizable monomers used in the emulsion polymerization process.

3. The use of claim 2, wherein the total amount of the propylene glycol employed in the process is 0.02 to 0.08 equivalent per 100 parts of total dry weight of polymers, copolymers, and copolymerizable monomers used in the emulsion polymerization process.

4. The use of claim 3, wherein the total amount of the propylene glycol employed in the process is 0.03 to 0.05 equivalent per 100 parts of dry weight of polymers, copolymers, and copolymerizable monomers used in the emulsion polymerization process.

5. The use of any one of claims 1-4, wherein the monomer is selected from the group consisting of acrylic acid, methacrylic acid, iso-bornyl acrylate, iso-bornyl methacrylate, iso-butylacrylate, iso-butyl methcrylate, n-butyl acrylate, n-butyl methacrylate, tert-butyl acrylate, tert-butyl methacrylate, tert-butylaminoethyl methacrylate, cyclohexyl acrylate, iso-decyl methacrylate, dimethylaminoethyl methacrylate, dodecyl acrylate, 2-ethoxyethyl acrylate, ethyl acrylate, ethyl methacrylate, 2-ethylhexyl acrylate, fumaric acid, 2-hydroxyethyl acrylate, 2-hydroxyethyl methacrylate, 2-hdyroxypropyl acrylate, 2-hydroxypropyl methacrylate, itaconic acid, lauryl methacrylate, maleic acid, methyl acrylate, methyl methacrylate, n-octyl acrylate, n-octyl methacrylate, phenethyl acrylate, phenyl acrylate, iso-propyl acrylate, iso-propyl methacrylate, n-tetradecyl acrylate, tridecyl methacrylate, vinyl acetate, and mixtures thereof; and the water soluble polymer is selected from the group consisting of polyvinyl alcohol, polyvinyl pyrrolidone, polyacrylamide, polyacrylonitrile, polyacrylic acid, starches, xanthum gum, hydroxyalkyl celluloses, polyethylene oxide, and copolymers containing at least two entities selected from the group consisting of vinyl acetate, vinyl alcohol, vinyl pyrrolidone, acrylamide, acrylonitrile, acrylic acid, methacrylic acid, styrene, esters of acrylic acid and esters of methacrylic acid.

6. The use of any one of the preceding claims, wherein the amount of water soluble polymer employed in the process is dissolvable in a volume of water at a temperature of 25°C, the volume of water being equal to the amount of water present in the formed latex.

## Patentansprüche

1. Verwendung von Propylenglykol in einem Verfahren zur Bildung eines Latex als ein Mittel zur Verminderung der Dilatierung des Latex, wobei das Verfahren die Emulsionspolymerisation mindestens eines Monomeren, ausgewählt aus der Gruppe bestehend aus Vinylacetat, Estern von Acrylsäure, Estern von Methacrylsäure, olefinischen Carboxylsäuren und Gemischen derselben, in Gegenwart von:
(a) mindestens einem wasserlöslichen Polymer und
(b) dem Propylenglykol,
umfaßt, wobei die Gesamtmenge des in dem Verfahren angewandten Propylenglykols mindestens 0,01 Äquivalent pro 100 Teile gesamtes Trockengewicht der Polymere, Copolymere und copolymerisierbaren Monomere, die im Emulsionspolymerisationsprozeß verwendet werden, beträgt.

2. Verwendung nach Anspruch 1, wobei das Gesamtgewicht des im Verfahren angewandten Propylenglykols 0,01 bis 0,1 Äquivalent pro 100 Teile gesamtes Trockengewicht der polymere, Copolymere und copolymerisierbaren Monomere, die im Emulsionspolymerisationsprozeß verwendet werden, beträgt.

3. Verwendung nach Anspruch 2, wobei die Gesamtmenge des im Verfahren angewandten Propylenglykols 0,02 bis 0,08 Äquivalent pro 100 Teile gesamtes Trockengewicht der polymere, Copolymere und copolymerisierbaren Monomere, die im Emulsionspolymerisationsprozeß verwendet werden, beträgt.

4. Verwendung nach Anspruch 3, wobei die gesamte Menge des im Verfahren angewandten Propylenglykols 0,03 bis 0,05 Äquivalent pro 100 Teile Trockengewicht der Polymere, Copolymere und copolymerisierbaren Monomere, die im Emulsionspolymerisationsprozeß verwendet werden, beträgt.

5. Verwendung nach einem der Ansprüche 1 bis 4, wobei das Monomer ausgewählt ist aus der Gruppe bestehend aus Acrylsäure, Methacrylsäure, Isobornylacrylat, Isobornylmethacrylat, Isobutylacrylat, Isobutylmethacrylat, n-Butylacrylat, n-Butylmethacrylat, tert.-Butylacrylat, tert.-Butylmethacrylat, tert.-Butylaminoethylmethacrylat, Cyclohexylacrylat, Isodecylmethacrylat, Dimethylaminoethylmethacrylat, Dodecylacrylat, 2-Ethoxyethylacrylat, Ethylacrylat, Ethylmethacrylat, 2-Ethylhexylacrylat, Fumarsäure, 2-Hydroxyethylacrylat, 2-Hydroxyethylmethacrylat, 2-Hydroxypropylacrylat, 2-Hydroxypropylmethacrylat, Itaconsäure, Laurylmethacrylat, Maleinsäure, Methylacrylat, Methylmethacrylat, n-Octylacrylat, n-Octylmethacrylat, Phenethylacrylat, Phenylacrylat, Isopropylacrylat, Isopropylmethacrylat, n-Tetradecylacrylat, Tridecylmethacrylat, Vinylacetat und Gemischen derselben; und das wasserlösliche Polymer ausgewählt ist aus der Gruppe bestehend aus Polyvinylalkohol, Polyvinylpyrrolidon, Polyacrylamid, Polyacrylonitril, Polyacrylsäure, Stärken, Xanthum gum, Hydroxylalkylcellulosen, Polyethylenoxid und Copolymerenmit einem Gehalt an mindestens zwei Bestandteilen, ausgewählt aus der Gruppe bestehend aus Vinylacetat, Vinylalkohol, Vinylpyrrolidon, Acrylamid, Acrylnitril, Acrylsäure, Methacrylsäure, Styrol, Estern von Acrylsäure und Estern von Methacrylsäure.

6. Verwendung nach einem der vorstehenden Ansprüche, wobei die Menge an im Verfahren angewandten wasserlöslichem Polymer in einem Volumen von Wasser bei einer Temperatur von 25°C losbar ist, wobei das Volumen an Wasser gleich ist der Menge an Wasser, die im gebildeten Latex vorliegt.

## Revendications

1. Utilisation de propylène glycol dans un procédé de formation de latex à titre d'agent pour réduire la dilatabilité du latex, le procédé consistant à polymériser en émulsion au moins un monomère choisi dans le groupe comprenant l'acétate de vinyle, les esters d'acide acrylique, les esters d'acide méthacrylique, les acides carboxyliques oléfiniques et leurs mélanges en présence :
(a) d'au moins un polymère soluble dans l'eau, et
(b) du propylène glycol,
dans laquelle la quantité totale de propylène glycol utilisée dans le procédé est d'au moins 0,01 équivalent par 100 parties du poids total à sec des polymères, copolymères et monomères copolymérisables utilisés dans le procédé de polymérisation en émulsion.

2. Utilisation selon la revendication 1, dans laquelle la quantité totale de propylène glycol utilisée dans le procédé est de 0,01 à 0,1 équivalent par 100 parties du poids total à sec des polymères, copolymères, et monomères copolymérisables utilisés dans le procédé de polymérisation en émulsion.

3. Utilisation selon la revendication 2, dans laquelle la quantité totale de propylène glycol utilisée dans le procédé est de 0,02 à 0,08 équivalent par 100 parties du poids total à sec des polymères, copolymères et monomères copolymérisables utilisés dans le procédé de polymérisation en émulsion.

4. Utilisation selon la revendication 3, dans laquelle la quantité totale de propylène glycol utilisée dans le procédé est de 0,03 à 0,05 équivalent par 100 parties du poids à sec des polymères, copolymères et monomères copolymérisables utilisés dans le procédé de polymérisation en émulsion.

5. Utilisation selon l'une quelconque des revendications 1 à 4, dans laquelle le monomère est choisi dans le groupe comprenant l'acide acrylique, l'acide méthacrylique, l'acrylate d'isobornyle, le méthacrylate d'isobornyle, l'acrylate d'isobutyle, le méthacrylate d'isobutyle, l'acrylate de n-butyle, le méthacrylate de n-butyle, l'acrylate de tert-butyle, le méthacrylate de tert-butyle, le méthacrylate de tert-butylaminoéthyle, l'acrylate de cyclohexyle, le méthacrylate d'isodécyle, le méthacrylate de diméthylaminoéthyle, l'acrylate de dodécyle, l'acrylate de 2-éthoxyéthyle, l'acrylate d'éthyle, le méthacrylate d'éthyle, l'acrylate de 2-éthylhexyle, l'acide fumarique, l'acrylate de 2-hydroxyéthyle, le méthacrylate de 2-hydroxyéthyle, l'acrylate de 2-hydroxypropyle, le méthacrylate de 2-hydroxypropyle, l'acide itaconique, le méthacrylate de lauryle, l'acide maléique, l'acrylate de méthyle, le méthacrylate de méthyle, l'acrylate de n-octyle, le méthacrylate de n-octyle, l'acrylate de phénéthyle, l'acrylate de phényle, l'acrylate d'isopropyle, le méthacrylate d'isopropyle, l'acrylate de n-tétradécyle, le méthacrylate de tridécyle, l'acétate de vinyle, et leurs mélanges; et le polymère soluble dans l'eau est choisi dans le groupe contenant l'alcool polyvinylique, la polyvinyl-pyrrolidone, le polyacrylamide, le polyacrylonitrile, l'acide polyacrylique, les amidons, la gomme xanthum, les hydroxyalkyl-celluloses, l'oxyde de polyéthylène et les copolymères contenant au moins deux entités choisies dans le groupe comprenant l'acétate de vinyle, l'alcool vinylique, la vinyl-pyrrolidone, l'acrylamide, l'acrylonitrile, l'acide acrylique, l'acide méthacrylique, le styrène, les esters d'acide acrylique et les esters d'acide méthacrylique.

6. Utilisation selon l'une quelconque des revendications précédentes, dans laquelle la quantité de polymère soluble dans l'eau utilisée dans le procédé peut être dissoute dans un volume d'eau à une température de 25°C, le volume d'eau étant égal à la quantité d'eau présente dans le latex formé.
